# FASCICULE DE BREVET EUROPEEN

(11) **EP 1 614 086 B1**
(45) Date de publication et mention de la délivrance du brevet: **09.05.2012**
(21) Numéro de dépôt: 04742521.0
(22) Date de dépôt: 16.04.2004
(51) Int. Cl.: G08G 5/00, B64D 45/04

(54) **Méthode et dispositif de navigation 3D sécurisée interactive**
SICHERES INTERAKTIVES 3D-NAVIGATIONSVERFAHREN UND EINRICHTUNG
SECURE INTERACTIVE 3D NAVIGATION METHOD AND DEVICE

(30) Priorité: 16.04.2003 FR 0304753
(43) Date de publication de la demande: 11.01.2006
(73) Titulaire: EUROCOPTER, 13725 Marignane Cédex (FR)
(72) Inventeur: PETILLON, Jean-Paul, F-13140 Miramas (FR)
(74) Mandataire: GPI & Associés
(86) Numéro de dépôt international: PCT/FR2004/000940
(87) Numéro de publication internationale: WO 2004/095394

(56) Documents cités:
- US-A- 4 839 658
- US-A- 5 381 338
- US-A- 5 555 175
- US-A- 6 114 990
- US-B1- 6 421 603
- US-B1- 6 424 889

## Description

L'invention concerne la navigation sécurisée d'un aéronef à voilure tournante permettant à l'équipage d'un aéronef de préparer, visualiser, modifier et suivre un plan de vol, hors infrastructures de vol aux instruments.

Le domaine des systèmes de navigation et gestion du vol (FMS, ou Flight Management System) d'un aéronef, et plus particulièrement d'un hélicoptère, recouvre usuellement les fonctions de positionnement, de préparation de plans de vol, et de guidage.

Le positionnement permet à chaque instant de déterminer où se trouve l'aéronef dans l'espace (latitude, longitude et altitude). Cette fonction fait appel à l'ensemble des senseurs permettant de connaître à chaque instant le vecteur d'état de l'aéronef, incluant les capteurs de vitesse sol, de vitesse angulaire, d'assiettes & cap, et de vitesse air.

Citons des documents relatifs à ce domaine.

Le document US6421603 décrit un Visual Flight Rules ou « VFR » en 3D, avec prise en compte des obstacles par modification d'altitude. L'élaboration d'un plan de navigation prévoit des fonctions d'élimination d'interférences. Une alarme de conflit prévient le pilote et adapte en vol le plan de vol modélisé. Selon ce document la « trajectoire » est une série de segments rectilignes entre deux points de passage. Des marges définissent un tube parallélépipédique à partir des segments, ces marges servant notamment à compenser des erreurs et incertitudes. Dans les régions sans obstacle la résolution est grossière, et la résolution est fine pour les régions à obstacles. Les conditions météorologiques vues comme des obstacles modèlent le plan de navigation.

Le document US6114990 décrit un simulateur en temps réel de trajectoire qui s'applique à des missiles tels que des drones. Chaque missile est pourvu d'un transpondeur en communication avec un autre missile, afin de lui indiquer sa trajectoire propre. Pour simuler en temps réel la position d'un ou plusieurs missiles militaires, éventuellement fictifs, un système de coordonnées tridimensionnel est employé. Un récepteur GPS reçoit des signaux de position et de synchronisation d'une constellation de satellites GPS, tandis que le transpondeur VHF/UHF assure la communication vers un ordinateur de bord, qui comporte un processeur de simulation. Ce processeur de simulation utilise un protocole contrôlé par événement, pour simuler la position au sein d'un système de coordonnées et dans le temps dudit objet et communiquer ces informations afin d'éviter les collisions en recourant à un algorithme auto-organisé dit "protocole STDMA". Ce document prévoit d'utiliser pour alertes-collision afin de mieux guider le missile et ajuster son avertissement.

Le document US6424889 décrit la génération d'une trajectoire horizontale d'évitement de zones dangereuses pour un aéronef, qui comprend la détermination de cercles tangents à la trajectoire en un point initial et en un point final. Puis, sont déterminées des tangentes à ces cercles et aux modèles de zones dangereuses. La sélection de paires de tangentes définit un squelette de trajectoire, et la détermination d'une trajectoire 2D qui comporte des cercles relie les tangentes.

Le document FR2801967 décrit pour un pilotage manuel, la nature continue d'une trajectoire qui permet d'utiliser un ou plusieurs symboles de guidage en "racine carrée", pendant toutes les phases de vol.

Dans un FMS conventionnel, un plan de vol est donc essentiellement une succession de segments rectilignes horizontaux ou sans dimension verticale.

La préparation des plans de vols (PdV) et leur stockage recouvre généralement : i) les bases de données contenant les points constitutifs des PdV et les PdV; ii) éventuellement un moyen de chargement et de transfert de ces bases de données de/vers un moyen de préparation sol (module de stockage amovible); iii) Les moyens d'édition de ces bases de données (interface homme-machine basée sur un CDU (« Control and Display Unit ») par exemple); et iv) Les moyens pour sélectionner un PdV - parmi tous ceux de la base de donnée - en tant qu'entrée de la fonction guidage. On appelle ce PdV le "Plan de Vol en destination". Ce PdV est par ailleurs usuellement visualisé sur un fond de carte.

Le guidage consiste à évaluer les écarts entre le vecteur d'état de l'aéronef d'une part, et le PdV choisi comme destination d'autre part. Cette fonction génère des consignes pour le pilote automatique ou « PA » (Automatic Flight Control System ou « AFCS ») et pour le pilote humain, qui permettent de maintenir l'aéronef sur le plan de vol.

Les systèmes de navigation actuellement en opération peuvent être classés en 2 catégories : Visual Flight Rules ou « VFR » et Instrument Flight Rules « IFR».

Les systèmes de navigation "VFR" ne permettent que de définir des plans de vol "2D". Le plan de vol est constitué d'une liste ordonnée de points géographiques définis par leurs seules latitudes et longitudes (pas d'information d'altitude). Pour construire un plan de vol, le pilote peut sélectionner les points dans la base de données, ou créer ces points où il le souhaite.

Dans les systèmes VFR, la fonction guidage assure que la trace horizontale de la trajectoire de l'aéronef soit la plus proche possible des segments rectilignes reliant les points successifs 2 à 2. Il n'y a aucune gestion de l'altitude par le système de navigation. C'est le pilote qui choisi et maintient son altitude de vol (en s'aidant le cas échéant du mode "acquisition et tenue d'altitude" du PA). Le choix de l'altitude de vol peut être anticipé par l'examen visuel d'une carte numérique (comportant des informations d'élévation du terrain) s'il y en a une à bord de l'aéronef, ou d'une carte papier.

Les systèmes de navigation "IFR" civils permettent de gérer des plans de vol "3D". La construction d'un plan de vol est fondée sur une base de données de "branches", i.e. des segments rectilignes horizontaux et des arcs DME (« Distance Measurement Equipment »), ces derniers n'étant utilisés que rarement, et uniquement en phase terminale avant l'approche finale. Chaque segment est assorti d'une altitude minimum de vol et de précisions requises de localisation et de guidage, latérales et verticales.

Cette base de données est fermée et certifiée. Le qualificatif "fermée" signifie que le pilote ne peut pas en modifier le contenu. Le terme "certifiée" indique que cette base de données a été bâtie par l'autorité aéronautique compétente, qui garantit une séparation adéquate de ces branches par rapport au terrain et aux obstacles. Par ailleurs, toutes les précautions nécessaires sont prises pour garantir l'intégrité de son contenu à bord de l'aéronef.

La construction d'un plan de vol IFR revient à choisir un itinéraire dans un réseau de "routes aériennes".

Un tel système de navigation "IFR" répond au besoin des avions de transport commercial, mais il est insatisfaisant pour la réalisation de certaines missions assignées aux aéronefs, et particulièrement celles des hélicoptères qui présentent des spécificités :
La phase de transit des missions d'hélicoptères est le plus souvent réalisée plus bas que les altitudes de vol des avions de transport commercial, de manière à ne pas interférer avec ces derniers. Le vol à basse altitude présente par ailleurs de nombreux autres avantages : durée de mission réduite, économie de carburant, meilleur confort des passagers et des membres d'équipage du fait que les cabines d'hélicoptères ne sont pas pressurisées. Ce dernier point est particulièrement crucial pour le transport de certains blessés qui ne peuvent supporter aucune variation de pression.

Le décollage et l'atterrissage des hélicoptères s'effectuent la plupart du temps en dehors des structures aéroportuaires. On mentionnera par exemple les missions EMS (« Emergency Medical Service ») où le point de posé peut être un toit d'hôpital ou une aire non préparée telle qu'un terrain de football ou un champ situé à proximité d'un accident.

La plupart des missions d'hélicoptères sont effectuées dans l'urgence (en particulier les missions EMS), ce qui limite l'éventualité d'une préparation minutieuse au sol.

Quand bien même le caractère d'urgence est moindre, les missions d'hélicoptères sont variées et spécifiques, contrairement aux routes régulières d'un transport aérien commercial ; les plans de vols sont donc rarement utilisables plusieurs fois, ce qui compromet la rentabilité économique d'une équipe sol dédiée à la préparation des missions.

Du fait de ces spécificités, la plupart des missions d'hélicoptères ne peuvent être réalisées qu'en bonnes conditions de visibilité (VMC). On estime que près de 40% des missions d'hélicoptères civils sont empêchées pour cause de mauvaises conditions météo.

L'invention vise à doter un aéronef à voilure tournante d'une capacité de vol IFR "autonome", i.e. en dehors des réseaux de routes aériennes dédiées aux gros porteurs commerciaux et en dehors des infrastructures aéroportuaires. Elle a également pour but d'augmenter la réactivité fréquemment exigée d'un équipage.

Le document US6421603 se limitant à d'évaluation de risques d'interférence entre un plan de vol prévu et des obstacles, par comparaison des modèles respectifs d'itinéraire et d'obstacles, ne permet pas de présenter au pilote la portion de trajectoire correspondant à l'interférence détectée ; il ne permet pas non plus de générer en temps réel une trajectoire prévisionnelle précise qui soit susceptible d'être suivie au plus près par un aéronef à voilure tournante donné, évoluant à basse altitude.

Le document US6424889 ne permet pas au personnel embarqué d'intervenir dans la planification de l'itinéraire.

Un objectif de l'invention est de proposer un système d'aide à la navigation, au guidage et au pilotage d'un aéronef à voilure tournante, aux instruments et hors de portée d'infrastructures IFR.

L'invention est définie par les revendications.

Un objectif de l'invention est de proposer un système d'aide à la navigation, au guidage et au pilotage d'un aéronef à voilure tournante à basse altitude.

Un objectif de l'invention est de proposer une planification et un suivi d'un vol sécurisé, interactif et autonome pour le personnel embarqué d'un aéronef.

Un objectif de l'invention est de proposer une aide à la navigation, au guidage et au pilotage, qui soit améliorée et/ou qui remédie à une partie au moins des inconvénients des FMS connus.

Selon un exemple de réalisation de l'invention, un procédé d'aide à la navigation d'un aéronef selon un itinéraire calcule une trajectoire (de l'aéronef) prévisionnelle, continue, à trois dimensions, proche de l'itinéraire, en fonction notamment de caractéristiques de l'aéronef, de sorte que l'on obtient une trajectoire qui peut d'une part servir de consigne pour un pilote ou un pilote automatique, et qui peut d'autre part être directement utilisée pour calculer (ou détecter) des interférences avec un terrain et/ou des obstacles.

On calcule, pour la plupart des points de la trajectoire prévisionnelle, généralement pour chaque point de cette trajectoire, une date et/ou une vitesse prévisionnelle, en fonction notamment de caractéristiques de l'aéronef, ce qui permet notamment de fournir à chaque instant au pilote une consigne de vitesse adaptée à la trajectoire à parcourir.

Tout ou partie de la trajectoire prévisionnelle peut être calculée de façon discrète, point à point : à partir d'un état ou vecteur initial de l'aéronef, on calcul un vecteur d'état ultérieur de l'aéronef, correspondant à un incrément temporel, par simulation ; on utilise de préférence à cet effet un module de simulation de PA (ou AFCS), un module de simulation de l'aéronef, et un module de simulation de guidage.

La trajectoire prévisionnelle peut aussi être calculée de façon analytique, par résolution d'un système d'équations.

Selon un exemple de réalisation :
i)- on enregistre dans au moins une mémoire embarquée des caractéristiques ou possibilités prévisionnelles de l'aéronef, ainsi qu'un modèle du terrain survolé par l'itinéraire ; puis, généralement en cours de vol, à l'aide d'un calculateur embarqué :
ii)- on calcule une trajectoire prévisionnelle à trois dimensions et dénuée de point anguleux qui soit proche dudit itinéraire, et correspondant auxdites caractéristiques ou possibilités prévisionnelles de l'aéronef ;
iii)- on détermine d'éventuelles interférences entre un volume de sécurité s'étendant le long de ladite trajectoire de consigne et un terrain survolé par l'aéronef ; à cet effet, de préférence, on détermine un tube ou tunnel s'étendant le long de la trajectoire et dont la section correspond à des marges de sécurité ; et
iv)- on recherche si un point du modèle du terrain est inclus à l'intérieur du tube ou tunnel, et dans l'affirmative on détermine au moins une portion de la trajectoire qui interfère avec le modèle du terrain ;
v)- on présente à un opérateur embarqué ladite trajectoire et/ou ladite portion de trajectoire qui interfère, de façon répétée dans le temps et avec une fréquence de présentation suffisamment élevée pour que l'opérateur embarqué puisse modifier ledit itinéraire afin de faire disparaître lesdites interférences;
vi)- on surveille l'introduction d'une donnée de modification d'itinéraire et/ou de trajectoire, et, tant qu'une donnée de modification d'itinéraire et/ou de trajectoire est introduite par un opérateur, on modifie le cas échéant l'itinéraire en fonction de ladite donnée, et on réitère les opérations ii) à vi).

En outre, on surveille et/ou on mesure un paramètre d'état de l'aéronef (position 3D, vitesse 3D, masse de l'aéronef, état de chaque moteur de propulsion), et, tant qu'une variation substantielle d'un paramètre d'état est détectée, on réitère les opérations ii) à vi).

On surveille et/ou on mesure un paramètre d'environnement de l'aéronef (vitesse du vent 2D, densité de l'air, température de l'air), et, tant qu'une variation substantielle d'un paramètre d'environnement est détectée, on réitère les opérations ii) à vi).

Ces opérations sont réalisées par les moyens embarqués à bord de l'aéronef, généralement de façon répétée tout au long du vol, et à intervalles de temps réguliers, par exemple à ladite fréquence de présentation.

Du fait que l'on corrige la trajectoire prévisionnelle, à intervalles de temps réguliers et selon une fréquence d'actualisation, en fonction de paramètres actuels relatifs à l'aéronef, du point de vol actuel de l'aéronef, et de paramètres actuels relatifs à l'environnement extérieur, on obtient une trajectoire de consigne actualisée pour le pilote et/ou le pilote automatique de l'aéronef.

Selon un exemple de réalisation de l'invention, la trajectoire prévisionnelle calculée présente trois dimensions dans l'espace, et chaque point de cette trajectoire est en outre daté, de façon prévisionnelle en fonction d'une vitesse prévisionnelle calculée en chaque point de la trajectoire prévisionnelle en fonction des performances de l'aéronef, de ses caractéristiques de fonctionnement et des caractéristiques de l'environnement.

Chaque point de la trajectoire prévisionnelle est défini par trois valeurs de positionnement (latitude, longitude et altitude) et par une information temporelle obtenue à partir de la vitesse prévisionnelle ; chaque vecteur d'état de l'aéronef comporte en outre les trois composantes de la vitesse prévisionnelle calculée en ce point.

Grâce au fait que la vitesse prévisionnelle de l'aéronef est calculée pour chaque point de la trajectoire, la forme des virages, dont le rayon dépend de la vitesse, est calculée pour chaque virage en fonction des valeurs prises par la vitesse le long de cette portion de trajectoire ; on obtient ainsi un tracé prévisionnel beaucoup plus proche de la réalité (future).

La gestion de la vitesse tout au long de la trajectoire permet aussi de gérer convenablement les pentes sol lors des changements d'altitude. Usuellement, un pilote adopte une vitesse verticale prédéfinie, compatible avec le confort des passagers (pour éviter les effets physiologiques indésirables des variations de pression trop rapides en cas de vitesse verticale trop importante). La pente sol dépend donc de la vitesse horizontale de l'aéronef et dans une moindre mesure du vent.

Selon un exemple de réalisation de l'invention, avant calcul de la trajectoire prévisionnelle, on détermine d'une part, pour le point « courant » qui est le point de départ de la trajectoire à calculer, une vitesse « sol », en module et direction, à partir d'une mesure de vitesse « air »; d'autre part, on détermine, pour chacun des tronçons de l'itinéraire, une vitesse « sol », en module et direction, à partir d'une consigne de vitesse « air » planifiée par le pilote pour le tronçon considéré.

La trajectoire prévisionnelle est ensuite calculée dans un repère lié au sol, ce qui permet notamment de détecter les interférences avec le terrain ; pour le guidage notamment, on convertit la vitesse du point courant de la trajectoire prévisionnelle - aussi dite « consigne de vitesse » - calculée par rapport au sol en une consigne de vitesse par rapport à l'air, en utilisant une vitesse estimée du vent.

L'invention repose ainsi sur la génération, sensiblement en « temps réel », d'une trajectoire prévisionnelle précise qui est en permanence maintenue conforme aux conditions et paramètres effectifs du vol en cours de réalisation par l'aéronef ; l'invention se base également sur la génération d'un volume de sécurité en forme de tube ou tunnel de section réduite (et variable) qui s'étend le long de cette trajectoire curviligne ; la génération de cette consigne de trajectoire et de ce volume est calculée en fonction de données d'itinéraire qui sont introduites et/ou modifiées par le pilote ou opérateur à l'aide d'un outil embarqué de construction graphique d'itinéraire, ces données étant enregistrées dans une mémoire associée à un calculateur de navigation de l'aéronef.

De préférence, pour présenter au pilote ou opérateur lesdites interférences éventuelles, on affiche sur un écran, une carte du terrain à survoler, une projection horizontale (c'est-à-dire une projection dans un plan horizontal) de l'itinéraire ainsi qu'une projection horizontale de la trajectoire prévisionnelle - également dite « trajectoire planifiée » - , et on affecte d'un premier signe distinctif la ou les portions de la projection horizontale de la trajectoire prévisionnelle pour laquelle (ou lesquelles) une interférence a été déterminée.

La projection horizontale de la trajectoire prévisionnelle (théorique) est généralement constituée d'arcs de loxodromies (grands cercles de la sphère terrestre) qui sont tangents à des arcs de petits cercles correspondant aux virages ; ces derniers sont remplacés par des arcs de cycloïdes lorsque le vent est pris en considération dans le calcul de la trajectoire prévisionnelle.

En outre, on affiche sur ledit écran une coupe verticale le long de la trajectoire prévisionnelle, dans laquelle coupe apparaissent : i) une icône figurant l'aéronef ; ii) le profil du terrain survolé ; iii) la trajectoire prévisionnelle ; et iv) la projection de l'itinéraire ; et on affecte d'un second signe distinctif la ou les portions de la projection verticale de la trajectoire prévisionnelle pour laquelle (ou lesquelles) une interférence a été déterminée ; de préférence encore, le second signe distinctif est identique ou similaire au premier signe distinctif.

La vue en coupe verticale de la trajectoire prévisionnelle est généralement constituée de segments rectilignes horizontaux (paliers) ou inclinés (montée ou descente à vitesse ascensionnelle constante) et d'arcs de parabole d'axe horizontal (montée ou descente à accélération constante), d'axe vertical (accélération verticale et vitesse horizontale constantes) ou d'axe incliné (accélérations verticale et horizontale constantes et non nulles).

Les premier et second signes distinctifs comportent généralement un signe visuel tel qu'une couleur contrastant avec la couleur des parties de la projection (horizontale et/ou verticale) de la trajectoire prévisionnelle pour laquelle (ou lesquelles) aucune interférence n'a été déterminée.

Ladite fréquence de présentation et/ou ladite fréquence d'actualisation est (sont) au moins égale à 1 Hertz, de préférence encore située(s) dans une plage allant de 1 à 100 Hertz, et en particulier dans une plage allant de 5 à 100 Hertz, notamment voisine(s) de 10 à 50 Hertz.

L'invention apporte au pilote ou à l'opérateur de l'aéronef une aide au pilotage en temps réel dont la précision est améliorée, grâce notamment à la réduction des marges de sécurité qu'il permet.

Grâce au fait que, notamment, la trajectoire prévisionnelle est déterminée en tenant compte du vent réel détecté, il est possible d'améliorer notablement la précision de la prévision et de diminuer les marges de sécurité horizontales et verticales prises en compte pour détecter les éventuelles interférences de la trajectoire avec le terrain.

Par ailleurs, pour vérifier la sécurité de la trajectoire prévisionnelle (de consigne) de l'aéronef, on vérifie que l'écart entre cette trajectoire et la position actuelle de l'aéronef reste inférieur à une valeur prédéterminée, et éventuellement on déclenche une alarme et/ou on affiche un signe avertisseur lorsque tel n'est pas le cas ; le cas échéant, on calcule une trajectoire de rejointe (en 3D) pour relier la position actuelle de l'aéronef à la trajectoire de consigne.

Selon un exemple de réalisation de l'invention, un dispositif embarqué ou embarquable à bord d'un aéronef facilite la navigation le guidage et le pilotage de cet aéronef, et comporte un système programmé pour calculer une trajectoire d'aéronef prévisionnelle, continue, à trois dimensions, proche d'un itinéraire, en fonction de caractéristiques de l'aéronef.

Le dispositif comporte un outil d'introduction de données d'itinéraire, un module pour surveiller l'introduction de données par cet outil et pour commander une réitération du calcul de trajectoire lorsqu'une donnée d'itinéraire est modifiée, ainsi qu'un organe de visualisation de la trajectoire calculée.

Selon un mode de réalisation, le dispositif comporte :
- des moyens d'acquisition de paramètres relatifs à l'aéronef et à l'environnement extérieur, comprenant des moyens de détermination précise de la position de l'aéronef dans l'espace ;
- une mémoire pour stocker l'itinéraire ;
- une mémoire contenant un modèle du terrain à survoler;
- un écran de visualisation d'une carte à un opérateur embarqué ainsi que l'interface nécessaire ;
- un outil interactif de construction graphique de l'itinéraire ;
   et
- des moyens de calcul de trajectoire pour calculer une trajectoire planifiée essentiellement curviligne à trois dimensions, qui soit proche de l'itinéraire, et correspondant à des possibilités prévisionnelles de l'aéronef, avec une fréquence de calcul au moins égale à la fréquence de présentation ;
- des moyens de détection pour détecter d'éventuelles interférences entre un volume de sécurité s'étendant le long et autour de ladite trajectoire et un terrain survolé par l'aéronef ; et
- des moyens de présentation visuelle pour présenter les éventuelles interférences à un opérateur embarqué, de façon répétée dans le temps et avec une fréquence de présentation suffisamment élevée pour qu'il puisse modifier ledit itinéraire à l'aide de l'outil interactif afin de faire disparaître lesdites interférences ;
- un calculateur de guidage dont l'une des entrées est la trajectoire de consigne générée par le calculateur de trajectoire et dont l'autre entrée est le vecteur d'état de l'aéronef mesuré par les capteurs; les sorties du calculateur de guidage sont reliées au dispositif de visualisation des données de pilotage d'une part, et au système de pilotage automatique d'autre part.

D'autres caractéristiques et avantages de l'invention apparaissent dans la description détaillée suivante, qui se réfère aux dessins annexés et illustre, à titre d'exemple non limitatif, des modes de réalisations de l'invention.

Sauf indication contraire, dans la présente demande : « 2D » signifie « (à) deux dimensions » ; « 3D » signifie « (à) trois dimensions » ; « PDV » signifie « plan de vol » ; « TDC » signifie « trajectoire de consigne » ou « trajectoire prévisionnelle » ; « FAF » signifie « Final Approach Fix » ou « point d'approche finale » ; « ToC » signifie **«** Top of Climb » ou « fin de montée » (fin de décollage).

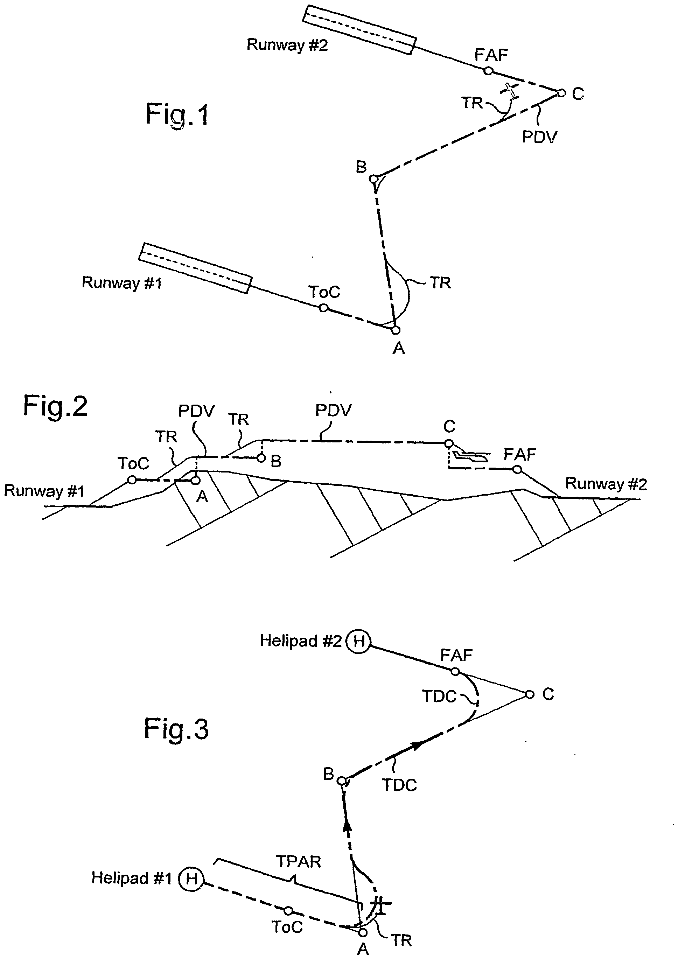

Les figures 1 et 2 sont respectivement une vue en projection horizontale et une vue en coupe verticale illustrant la notion de "Plan de Vol" des réalisations connues. Le plan de vol "vu" par un FMS connu est constitué des segments en traits gras (« ToC-A-B-C-FAF »). Ces schémas illustrent également - sous la forme d'un trait pointillé - une trajectoire réelle susceptible d'être suivie par un aéronef suivant ce plan de vol.

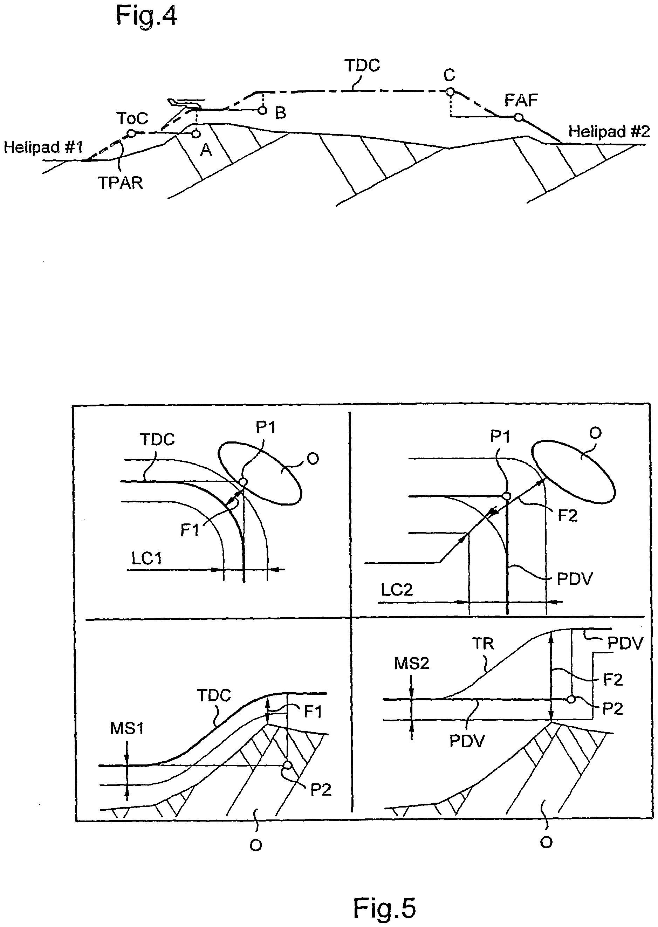

Les figures 3 et 4 sont respectivement une vue en projection horizontale et une vue en coupe verticale illustrant une trajectoire prévisionnelle selon l'invention - représentée en traits gras et s'étendant d'un 1^{er} hélipad H1 jusqu'à un 2^{nd} hélipad H2, en passant par cinq points ToC, A, B, C, FAF - ainsi qu'une trajectoire réelle - représentée en traits pointillés - susceptible d'être suivie par un aéronef volant selon un itinéraire qui correspond au plan de vol des figures 1 et 2.

Sur les figures 1 à 4, un aéronef est représenté sous forme d'une croix fig. 1 et 3, et sous forme d'un hélicoptère schématisé fig. 2 et 4.

La figure 5 illustre schématiquement la réduction des marges de sécurité obtenue grâce à l'invention : la première ligne illustre schématiquement en vue en plan horizontale une TDC selon l'invention (colonne de gauche) et un plan de vol conventionnel (colonne de droite), et les largeurs de couloirs de sécurité qui leur sont respectivement associés - qui sont illustrés en traits pointillés ; la seconde ligne illustre schématiquement en vue en coupe verticale une TDC selon l'invention (colonne de gauche) et un plan de vol conventionnel (colonne de droite), et les marges de sécurité en altitude qui leur sont respectivement associées.

La figure 6 est un schéma synoptique simplifié d'un dispositif conforme à l'invention.

La figure 7 est un organigramme simplifié d'un procédé conforme à l'invention.

La figure 8 est un schéma bloc d'un système de calcul de trajectoire conforme à l'invention.

La figure 9 illustre une trajectoire de rejointe verticale conforme à l'invention.

La figure 10 illustre une trajectoire de rejointe horizontale conforme à l'invention.

Au sens de l'invention, on entend par « itinéraire » une succession de points de passage à survoler, à approcher, ou sur lesquels se poser, et le cas échéant la succession de segments ou « legs » que ces points constituent deux à deux.

Chaque segment ou portion d'itinéraire peut être défini par les trois coordonnées de chacune des deux extrémités du segment ; alternativement, le segment d'itinéraire peut être défini par la latitude et la longitude seulement de chaque extrémité, ainsi que par l'altitude du segment ; cette altitude peut, en variante, être remplacée par une hauteur de survol du point le plus haut du terrain survolé par ce segment.

Pour chaque point de passage de l'itinéraire, on peut en outre définir si le point est à survoler ou à approcher ; on peut également affecter une largeur et une hauteur de sécurité définissant un volume de sécurité, pour tout ou partie de l'itinéraire, en particulier aux segments de départ et d'arrivée.

Un itinéraire ainsi défini présente l'avantage d'être facile à pratiquer par des personnes familières des routes et plans de vol conventionnels ; d'autres manières de créer ou modifier un itinéraire selon l'invention incluent notamment la génération de « splines » 3D passant par des points 3D - ou contraintes - prédéfinis.

Par référence aux figures 1 et 2, on voit que la trajectoire réelle TR suivie par l'aéronef s'écarte nécessairement significativement du plan de vol PDV qui forme une ligne brisée en projection horizontale (figure 1), notamment dans les phases de virages, mais aussi dans les phases de changement d'altitude en marches d'escalier, qui ne peuvent pas non plus être suivies par l'aéronef. La sécurisation d'un tel plan de vol est usuellement résolue, dans les procédures IFR, par des marges latérales importantes pour pouvoir y inscrire les phases de virage, ainsi que des marges verticales surabondantes ; les phases de montée en "marches d'escalier" sont "lissées" par l'invention comme illustré figure 4, avec comme bénéfice une plus grande facilité pour les rendre compatibles avec le terrain : la figure 2 montre une altitude du plan de vol en conflit avec le terrain au passage du point A, alors que les trajectoires réelle et prévisionnelle n'interfèrent pas avec le terrain (figures 3 et 4).

Dans un exemple de l'invention, la trajectoire prévisionnelle TDC est une ligne 3D continue et sans points anguleux, graduée en temps et "volable" par l'aéronef hôte. Une manière de « construire » une telle trajectoire est de faire en sorte qu'elle s'appuie sur une ossature de segments rectilignes horizontaux similaire au plan de vol conventionnel.

Par référence aux figures 3 et 4, la trajectoire prévisionnelle TDC prolonge une trajectoire TPAR déjà parcourue par l'aéronef à l'instant considéré ; la portion de trajectoire déjà parcourue est hachurée sur les figures 3 et 4.

La trajectoire réelle TR (ici aussi représentée avec un trait pointillé fin) peut rester très proche de la trajectoire calculée prévue TDC, également nommée "trajectoire de consigne".

Conformément à un aspect de l'invention, le pilote crée, modifie, déplace, ou supprime des éléments - tels que les points A, B, C - de l'ossature de la trajectoire, pour modifier la trajectoire.

Le gain de précision dans la définition de la trajectoire planifiée permet notamment de réduire drastiquement les distances minimales de sécurité à respecter, comme l'illustrent les schémas figure 5 : la définition conventionnelle (illustrée colonne de droite) d'un plan de vol PDV impose en certains endroits une distance de séparation par rapport au terrain illustrée par les flèches F2, bien plus importante que la distance F1 (colonne de gauche) strictement requise pour couvrit l'erreur de localisation et les imprécisions de pilotage ; il en résulte que la largeur LC1 du couloir de sécurité associé à la trajectoire TDC est bien inférieure à la largeur LC2 du couloir de sécurité associé au plan de vol PDV; selon l'invention (colonne de gauche), un point P1 ou P2 de passage de l'itinéraire peut interférer avec un obstacle O, tant que la trajectoire de consigne prévisionnelle TDC n'interfère pas ; les distances de sécurité LC1 latérale et MS1 verticale peuvent ainsi être de l'ordre de quelques dizaines ou centaines de mètres seulement.

Dans un FMS conventionnel, le guidage horizontal est réalisé sur la base de l'écart latéral entre l'aéronef et le segment rectiligne courant. Un mécanisme d'anticipation des virages, associé à l'autorité limitée du FMS sur le PA, permet théoriquement de réaliser les formes de virage souhaitées. En pratique, on maîtrise mal la trajectoire réelle pendant les phases de virage.

Dans le cas d'un pilotage manuel conventionnel, la problématique est la même : à l'instant d'anticipation d'un virage, on présente au pilote un nouvel angle de route ; le pilote met alors l'hélicoptère en virage à "taux 1" et attend d'être aligné sur le nouveau segment pour remettre l'aéronef à plat. Aucun moyen n'est fourni pour moduler l'inclinaison et donc la vitesse de virage.

Dans un exemple de selon l'invention, le guidage horizontal est réalisé sur la base d'écarts à la trajectoire de consigne, y compris dans ses phases curvilignes. La trajectoire est calculée avec des virages par exemple à "taux 1", correspondant à 3 degrés par seconde (°/s) de variation de cap, mais le FMS a sur le PA une autorité supérieure, par exemple à "taux 1.5" (4.5°/s), ce qui permet de maintenir le guidage en boucle fermée y compris dans les virages, et de rattraper le cas échéant des erreurs de suivi dues aux fluctuations du vent.

S'agissant du pilotage manuel, l'affichage de la trajectoire curviligne continue en lieu et place des segments rectilignes successifs de l'itinéraire permet aussi de réaliser le guidage curviligne ; dans les 2 cas (guidage automatique ou manuel) l'invention permet une précision de trajectoire dans un plan horizontal bien supérieure à celle d'un système conventionnel.

Dans un FMS conventionnel, le guidage vertical est réalisé sur la base de l'écart entre l'altitude de l'aéronef et celle du segment rectiligne horizontal courant. Un mécanisme d'anticipation de mise en montée (en descente), associé à la vitesse standard de montée (de descente) du PA, permet théoriquement de rallier l'altitude prévue au bon endroit. Par contre, pendant la phase de montée (descente) où on est en butée d'autorité, l'aéronef est en boucle ouverte et on ne peut pas non plus prévoir de manière précise la trajectoire.

S'agissant du pilotage manuel, la problématique est la même : à l'instant d'anticipation de mise en montée (en descente), on fait disparaître l'ancienne altitude suivie et on affiche la nouvelle altitude à atteindre et à tenir (qui est du reste souvent hors champ du baro-altimètre où cette consigne est usuellement affichée), le pilote met alors l'hélicoptère en montée (en descente), à 700 pied/minute par exemple, et attend d'atteindre la nouvelle altitude pour cesser de monter (de descendre).

Dans un exemple de réalisation de l'invention, le guidage vertical est réalisé sur la base d'écarts à la trajectoire de consigne, y compris dans ses phases de montée (de descente) et de ressource (courtes portions curvilignes dans le plan vertical). La trajectoire est calculée avec des taux de montée (descente) standards (700 ft/mn par exemple), mais le FMS a sur le PA une autorité un peu plus grande (1000 ft/mn par exemple), ce qui permet de maintenir le guidage en boucle fermée pendant les phases de montée (descente), et de rattraper le cas échéant des erreurs de suivi dues aux fluctuations du vent, aux courants ascendants ou à toute autre cause.

S'agissant du pilotage manuel, comme dans le document FR2801967 la nature continue de la trajectoire permet d'utiliser un ou plusieurs symboles de guidage en "racine carrée", pendant toutes les phases de vol.

Grâce à un calcul cyclique temps réel de la trajectoire de consigne et de ses interférences avec le terrain et les obstacles, cette trajectoire évolue continûment en fonction : i) des évolutions du vecteur d'état initial: la trajectoire reste "accrochée" à l'aéronef, ce qui permet de montrer par exemple l'instant de montée "au plus tard" quand on s'approche d'un relief élevé; ii) de l'état de motorisation de l'aéronef porteur : en cas de panne d'un moteur, les phases de montée voient leur pente diminuer, ce qui permet le cas échéant au pilote d'anticiper les portions du vol qui ne sont plus sécurisées (impossibilité de franchir un relief) et de modifier le plan de vol en conséquence (contournement dudit relief par exemple); iii) de la force et de la direction du vent : en cas d'évolution du vent - le générateur de trajectoire utilisant des hypothèses de vitesse air et de vitesse verticale - la pente de la trajectoire évolue, ce qui permet de garantir un pilotage naturel "dans l'air" plutôt que de forcer le pilote à maintenir son aéronef sur une pente sol plus difficile à piloter ; et iv) des modifications apportées par le pilote à son itinéraire.

Si le dispositif utilisé pour apporter ces modifications est un désignateur graphique (souris, trackball, joystick ..) et que la trajectoire et ses éventuelles interférences sont affichées sur un fond cartographique, le système interactif permet une préparation extrêmement efficace : le pilote dessine son itinéraire, la trajectoire de consigne est générée continûment (à une cadence de l'ordre de 12Hz ou plus ; sa forme est telle qu'elle peut être suivie en vol, et les parties de la trajectoire qui interférent avec le terrain ou les obstacles sont colorées en rouge. Pour modifier l'itinéraire, il suffit par exemple au pilote de faire glisser les extrémités des segments ou leur altitude pour éliminer les interférences et obtenir un itinéraire et une trajectoire planifiés sécurisés.

Par ailleurs, la visualisation des virages permet d'éviter de placer des points successifs trop proches les uns des autres : dans ce type de situation, le générateur de trajectoire peut par exemple "négocier" les virages trop proches en faisant ralentir l'hélicoptère, ce qui se voit par le fait que les rayons diminuent; le pilote peut alors corriger la situation si il ne souhaite pas passer ces virages à une vitesse très faible.

L'invention détermine la trajectoire volable qui colle au mieux à l'itinéraire dessiné par le pilote; il détecte, localise et montre les portions de la trajectoire (en fait les portions du tube qui l'entoure) en interférence avec le modèle de terrain comportant des données d'élévation du sol et des obstacles (végétation et constructions au dessus du sol).

Le générateur de trajectoire est implémenté en plusieurs exemplaires dans un système selon l'invention : un 1er générateur est dédié au traitement de l'itinéraire engagé en destination ; au moins un autre générateur sert à la préparation d'un autre itinéraire (par exemple le vol de retour, si le pilote ne souhaite pas intégrer les vols aller et retour dans un même itinéraire). Pour un générateur traitant un autre itinéraire que celui engagé en destination, on peut « alimenter » l'entrée "vecteur d'état initial" par autre chose que les position/vitesse de l'aéronef porteur : par exemple par le 1 er point de l'itinéraire, de manière que la totalité de la trajectoire soit générée.

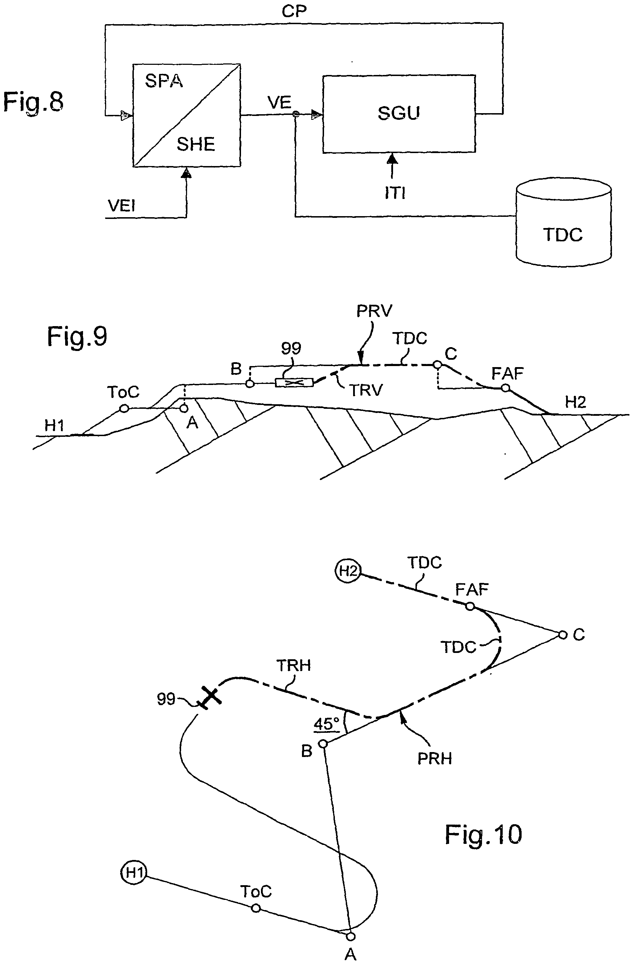

Le générateur de trajectoire peut être considéré comme un simulateur qui propage le vecteur d'état initial le long de l'itinéraire, en montrant où l'aéronef va passer, compte tenu de sa position actuelle, de sa motorisation, de sa masse et de la force du vent. Cette caractéristique du générateur de trajectoire lui permet de générer une trajectoire de rejointe dans le plan vertical, lorsque l'aéronef s'est écarté de la trajectoire prévue initialement, comme illustré figure 9.

Le générateur de trajectoire peut également être implémenté de manière que - en cas d'écart latéral important entre l'aéronef porteur et son itinéraire en destination - il génère une trajectoire de rejointe horizontale.

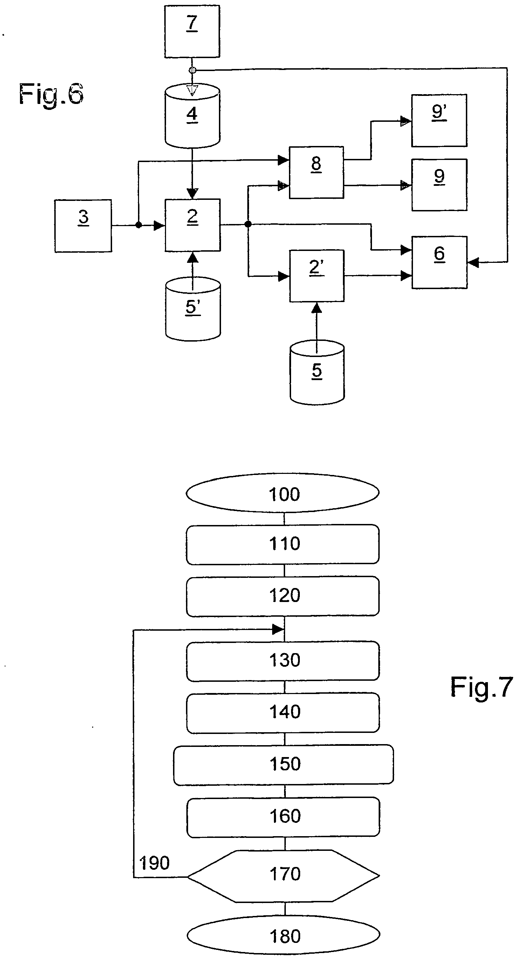

Sur la figure 6, le dispositif 1 selon l'invention permet, pendant le suivi d'un itinéraire prédéterminé, de réaliser de façon automatique, à l'aide de moyens embarqués sur l'aéronef, les opérations suivantes :
a) calculer de façon précise une trajectoire prévisionnelle de l'aéronef ;
β) vérifier la sécurité du vol de l'aéronef selon cette trajectoire par rapport à des données d'élévation du terrain et des obstacles ; et
γ) permettre au navigateur embarqué de modifier en temps réel et en connaissance de cause, l'itinéraire et/ou la trajectoire prévisionnelle, grâce à la visualisation actualisée des interférences éventuelles.

Plus particulièrement, le dispositif 1 réalise cycliquement et en temps réel, pendant la préparation et/ou le suivi d'un itinéraire défini en 3 dimensions, les opérations suivantes :
a) - calcul d'une trajectoire de consigne précise compatible des capacités de l'aéronef ; cette trajectoire de consigne débute de la position actuelle de l'aéronef, elle s'étend le long de l'itinéraire, et elle se termine à la fin de l'itinéraire ;
b) - détection et localisation des éventuelles interférences entre un volume entourant ladite trajectoire de consigne d'une part, et des données d'élévation du terrain et des obstacles d'autre part;
c) - présentation sur un moyen de visualisation cartographique de ladite trajectoire de consigne et présentation, de manière distincte, des éventuelles portions de la trajectoire de consigne en interférence avec les données d'élévation du terrain et des obstacles;
d) - élaboration d'ordres de guidage, à destination d'un dispositif de visualisation des données de pilotage d'une part, et d'un système de pilotage automatique d'autre part.

Pour ce faire, ledit dispositif 1 comporte :
- un calculateur de trajectoire 2 susceptible de - et programmé pour - calculer la trajectoire curviligne en trois dimensions, et affectant à chaque point de la trajectoire une date et heure de passage prévisionnelles calculées en fonction d'une vitesse prévisionnelle le long de la trajectoire; le dispositif calcule l'évolution de la latitude, de la longitude et de l'altitude de l'aéronef, en fonction du temps, tout au long de la trajectoire ;
- un calculateur 2' de détection et de localisation des interférences ; ce calculateur est relié à la sortie du calculateur de trajectoire 2 d'une part, et à la mémoire 5 des données d'élévation du terrain et des obstacles d'autre part ;
- des moyens 3 d'acquisition de paramètres relatifs à l'aéronef et à l'environnement extérieur, ces moyens 3 incluant en particulier des capteurs, des centrales anémo-barométriques, des centrales inertielles ou un système de positionnement par satellites (DGPS, GPS ou GPS augmenté, SBAS); ces paramètres incluent notamment : la position géographique en 3 dimensions, les 3 angles d'attitude et de cap, le vecteur vitesse sol, le vecteur vitesse air, les température et pression statiques de l'air environnant, la masse actuelle de l'aéronef et son état de motorisation (nombre de moteurs en état de fonctionnement) ; ces moyens 3 sont reliés au calculateur de trajectoire 2 d'une part, et au calculateur de guidage 8 d'autre part, pour leur transmettre cycliquement et en temps réel les données actualisées nécessaires à leurs calculs ;
- une mémoire 4 pour stocker au moins un itinéraire construit ou en cours de construction ; cette mémoire est reliée au calculateur de trajectoire 2 pour lui transmettre l'itinéraire choisi comme destination ;
- une mémoire 5 contenant des données d'élévation du terrain et des obstacles au-dessus desquels s'étend l'itinéraire ; cette mémoire est reliée au calculateur de détection et de localisation des interférences ;
- une mémoire 5' contenant des données caractéristiques des performances de vol de l'aéronef sur lequel est installé le dispositif ; cette mémoire est reliée au calculateur 2 pour lui fournir ces données caractéristiques ;
- un moyen de visualisation 6 relié au calculateur de trajectoire 2 d'une part, et au calculateur de détection et de localisation des interférences 2' d'autre part ; cette liaison permet d'acquérir la trajectoire de consigne et ses zones d'interférence avec le terrain et les obstacles pour les afficher sur l'écran de manière distincte ;
- un outil interactif 7 de construction graphique de l'itinéraire délivrant des données de modification d'itinéraire lorsqu'il est actionné ou déplacé par l'opérateur embarqué; à cet effet, l'outil 7 comporte un dispositif de contrôle d'un curseur graphique permettant de désigner et manipuler les éléments de l'itinéraire à 3 dimensions ; pour réaliser ces manipulations, cet outil est relié à la mémoire d'itinéraire 4 ; cet outil 7 est également relié au dispositif de visualisation 6 de manière à matérialiser la position du curseur graphique ;
- un calculateur de guidage 8 dont l'une des entrées est la trajectoire de consigne générée par le calculateur 2 et dont l'autre entrée est le vecteur d'état de l'aéronef mesuré par les capteurs 3 ; les sorties du calculateur de guidage sont reliées au dispositif de visualisation des données de pilotage 9 d'une part, et au système de pilotage automatique 9' d'autre part ;
- un dispositif de visualisation des données de pilotage 9 comportant notamment un indicateur d'altitude et de vitesse verticale, un indicateur d'écart de route et un indicateur de vitesse air.

Préalablement à l'exécution d'un vol le long d'un nouvel itinéraire, on réalise généralement la préparation et la sécurisation du début au moins de l'itinéraire. Pour économiser du temps, ou parce que la destination finale n'est pas connue au départ, on peut alors décoller et poursuivre la planification de la suite de l'itinéraire à bord de l'aéronef pendant le début du vol.

Les données correspondant à l'itinéraire en cours de construction ou de modification par le pilote ou le navigateur utilisant le dispositif de contrôle du curseur graphique sont présentées en entrée du calculateur de trajectoire 2 qui en dérive une trajectoire prévisionnelle respectant l'itinéraire et respectant également, et en priorité, l'enveloppe de vol de l'aéronef, contenue dans la mémoire 5'.

Le calculateur d'interférences 2' utilise les données d'élévation du terrain et des obstacles stockées dans la mémoire 5 et vérifie qu'aucune d'entre-elles n'a une altitude qui excède celle du plancher d'un volume de sécurité - ou tunnel - entourant la trajectoire de consigne. Le volume de sécurité est déterminé par la trajectoire et par des marges de sécurité (distances minimales acceptables par rapport au relief, dans le plan horizontal et dans le plan vertical, compte tenu de la précision de pilotage et de la précision des capteurs de position) qui déterminent la section transversale de ce volume. Le cas échéant, l'emplacement de la trajectoire en interférence est marqué comme tel.

Les interférences éventuellement détectées et localisées par le calculateur (2') sont alors dessinées, de manière distincte du reste de la trajectoire qui est lui aussi dessiné, sur l'écran du dispositif de visualisation 6. De cette manière, le pilote est en mesure de modifier l'itinéraire jusqu'à faire disparaître les parties de la trajectoire de consigne en interférence.

Pour élaborer la trajectoire, le calculateur 2 table par ailleurs sur diverses hypothèses quant aux valeurs et variations prévisibles des valeurs des paramètres d'état (position initiale, masse et état de motorisation de l'aéronef, vitesse et direction du vent ainsi que température et densité de l'atmosphère). Ces paramètres sont susceptibles de connaître des variations non prévisibles (évolution du vent, panne d'un moteur, sortie de- puis retour vers- l'itinéraire décidés par le pilote) ou mal prévisibles (évolution de la masse de l'aéronef), que le calcul cyclique et temps réel, permet de prendre en compte.

Ainsi, ladite trajectoire de consigne est corrigée par le calculateur 2, en fonction de paramètres actuels de l'aéronef (masse, configuration aérodynamique, état de panne des moteurs), de son vecteur d'état (position et vitesse), et de celui de l'atmosphère (vitesse du vent, pression et température).

Le guidage précis de l'aéronef le long de cette trajectoire actualisée est assuré par le calculateur 8, qui délivre des ordres 3D continus au système de visualisation des paramètres de pilotage 9 et au pilote automatique 9' d'une part.

Le calculateur 8 élabore également des indications sonores et/ou visuelles d'écart excessif qui sont particulièrement utiles, en cas d'absence de pilote automatique, dans les phases de vol où l'attention du pilote est distraite par d'autres tâches que le guidage précis sur la trajectoire de consigne (pendant les procédures de radiocommunication avec le contrôle aérien par exemple). Ces alertes sont déclenchées avant que l'aéronef n'atteigne le bord du tunnel (défini par les marges de sécurité), de manière que le pilote puisse rectifier sa trajectoire et ainsi éviter de sortir du volume sécurisé.

L'affichage d'un symbole représentatif de l'aéronef dans la même représentation cartographique que la trajectoire de consigne et l'itinéraire par le dispositif de visualisation 6 participe aussi de la fonction guidage, en offrant le cas échéant au pilote une vision à plus long terme du déroulement du vol.

Lorsque l'aéronef s'est écarté de la trajectoire prévisionnelle d'une distance importante, le calculateur 2 calcule, à partir d'informations issues des moyens d'acquisition 3 et de la trajectoire prévisionnelle, une trajectoire de rejointe qui permet, depuis le point de vol actuel, de rejoindre l'itinéraire prévu.

Par référence aux figures 7 et 8, à chaque cycle de calcul de la TdC (par exemple 25 fois par seconde), on effectue une simulation complète du vol depuis la position présente (Vecteur d'Etat Initial ou « VEI ») jusqu'à la destination finale. Cette simulation est schématisée figure 8.

Toutes les 40ms, on effectue de l'ordre de 25 * 3600 = 90000 pas d'intégration par heure de vol jusqu'en fin de l'itinéraire à simuler.

La boucle de calcul du calculateur 2 comporte un simulateur SHE de l'hélicoptère et un simulateur SPA de son pilote automatique, qui reçoit en entrée des consignes de pilotage CP (typiquement une consigne de roulis, une consigne d'altitude et une consigne de vitesse air), et fournit en sortie un vecteur d'état VE. La simulation de l'hélicoptère peut être relativement simple, mais il importe que son enveloppe de vol (i.e. sa capacité de vitesse ascensionnelle, fonction de la vitesse air horizontale, de la masse, de la densité de l'air et de la motorisation), qui est intégrée au simulateur SHE, soit réaliste.

Le vecteur d'état VE de l'hélicoptère simulé est présenté en entrée d'un module SGU de guidage 3D conventionnel, simulé également, qui reçoit sur son autre entrée les données d'itinéraire ITI actuellement en destination. Ce module de guidage simulé comprend un séquenceur pour gérer les commutations d'un Leg au suivant, avec les anticipations usuelles des virages, des changements d'altitude et des changements de vitesse; ainsi que les algorithmes de calcul des consignes de roulis, d'altitude et de vitesse.

A chaque début (étape 100 figure 7) d'un cycle de calcul de 40 millisecondes (ms), si la TdC doit être rafraîchie à 25Hz, on efface (étape 110) le contenu de la mémoire contenant les résultats de calcul de la TDC du cycle de calcul précédent ; on initialise (étape 120) le modèle hélicoptère (ou hélicoptère virtuel) avec le vecteur d'état VEI de l'hélicoptère réel.

On itère ensuite les calculs (étapes 130 et 140) d'entretien de l'hélicoptère virtuel et des algorithmes de guidage virtuel. A chaque itération, on stocke (étape 150) dans une mémoire M organisée en tableau la trajectoire TDC sous forme de la position 3D calculée ainsi que le temps simulé, et on incrémente (étape 160) l'indice de point à calculer (on passe au point suivant).

Le critère d'arrêt (étape 180) de ces calculs itératifs est que l'automate de guidage simulé ait atteint son état de fin d'itinéraire (test 170) ; à défaut, on répète les opérations 130 à 160 (branche conditionnelle 190). Ces opérations sont schématisées par l'organigramme figure 7.

On obtient ainsi à chaque cycle de 40ms la description segmentée de la totalité de la trajectoire. Le pas d'intégration temporelle n'est pas nécessairement égal au pas de calcul de la trajectoire complète. Son choix résulte d'un compromis entre le souhait de petits segments pour avoir une courbe lisse et le souhait de limiter la taille de la liste de points constituant la trajectoire.

Cette manière de générer la TdC s'appuie sur les algorithmes existants de guidage 3D tels qu'ils sont implémentés dans les FMS IFR en opération. Elle est donc facile à mettre en oeuvre. Elle a par contre l'inconvénient de requérir une puissance de calcul relativement élevée. De plus, le volume de données constituant la TdC résultante est également important. C'est pourquoi on peut avoir intérêt à utiliser une méthode de calcul analytique basée sur la résolution d'un système d'équations différentielles régissant un processus bouclé Hélicoptère/PA/Guidage tel que celui schématisé figure 8, afin de diminuer la puissance de calcul nécessaire et le volume de données résultant du calcul.

Par référence à la figure 9, le calculateur 2 détermine une trajectoire TRV de rejointe verticale, lorsque la position effective de l'aéronef 99 à l'instant considéré s'est écartée de la trajectoire TDC correspondant à l'itinéraire H1-ToC-A-B-C-FaF-H2 planifié, au-delà de marges (d'altitude) prédéterminées ; la trajectoire TRV est calculée en fonction de données caractéristiques de l'aéronef et de l'environnement ; cette trajectoire de rejointe se substitue, jusqu'au point PRV de rejointe verticale, au début de la TDC calculée sur la base de l'itinéraire, et se raccorde continûment en ce point avec la trajectoire TDC prévue.

De façon similaire, par référence à la figure 10, le calculateur 2 détermine une trajectoire TRH de rejointe horizontale, lorsque la position effective de l'aéronef 99 à l'instant considéré s'est écartée de la trajectoire TDC correspondant à l'itinéraire H1-ToC-A-B-C-FaF-H2 planifié, au-delà de marges latérales prédéterminées ; la trajectoire TRH est calculée en fonction de données caractéristiques de l'aéronef et de l'environnement, et en fonction d'un angle de rejointe (qui est de 45 degrés dans le cas illustré figure 10) ; cette trajectoire de rejointe est constituée de deux portions curvilignes reliées par une portion rectiligne, qui s'étend selon ledit angle de rejointe ; elle se substitue, jusqu'au point PRH de rejointe horizontale, au début de la TDC calculée sur la base de l'itinéraire, et se raccorde continûment en ce point avec la trajectoire TDC prévue.

Dans un cas général, lorsque l'aéronef s'est écarté de l'itinéraire planifié de façon importante, le calculateur détermine une trajectoire de rejointe à trois dimensions dont les projections verticale et horizontale reprennent respectivement les caractéristiques des trajectoires de rejointe illustrées figures 9 et 10.

L'aide au pilotage de l'aéronef peut être renforcée au moyen de systèmes permettant : i) une présentation, sur un écran de navigation usuel de l'aéronef, de l'environnement hypsométrique sous la forme de coupes de terrain et de vues horizontales faisant apparaître les reliefs dangereux autour de l'aéronef ; ii) une présentation, sur les mêmes coupes verticales et horizontales, de l'environnement aéronautique de l'aéronef, c'est-à-dire des infrastructures matérielles (balise, aéroports, ...) et virtuelles (zones aériennes, points de report ...) ; et iii) une présentation des aéronefs détectés dans l'environnement aérien survolé par un système ACAS.

L'invention peut avantageusement remplacer un système FMS VFR. L'avantage est de procurer à l'équipage une gestion complète des 3 dimensions et un allégement de la charge de travail, notamment dans la tâche de préparation d'une mission. La capacité d'anticipation de l'invention apporte également une aide significative pendant le suivi de l'itinéraire.

## Revendications

1. Procédé d'aide à la navigation, au guidage et au pilotage aux instruments d'un aéronef (99) à voilure tournante, pourvu d'un système de pilotage automatique (9'), un itinéraire de navigation de cet aéronef (99) étant défini par des données d'itinéraire (ITI) ; ce procédé calculant à bord de l'aéronef (99) une trajectoire (TDC) prévisionnelle de l'aéronef (99) qui est continue, à trois dimensions ;
le procédé calculant la trajectoire (TDC) prévisionnelle pour des points de cette trajectoire (TDC), avec une date et / ou une vitesse prévisionnelle ; cette trajectoire (TDC) comportant des portions curvilignes, est dénuée de point anguleux **caractérisé en ce que** le procédé respecte l'enveloppe de vol de l'aéronef (99) ;
ce procédé acquérant à l'aide de moyens embarqués sur l'aéronef (99) des caractéristiques d'enveloppe et d'environnement extérieur de l'aéronef (99), en fonction desquelles caractéristiques le procédé calcule la trajectoire (TDC) ; ces caractéristiques incluant au moins : une position géographique de l'aéronef (99) ; des angles d'altitude et de cap de l'aéronef (99) ; un vecteur vitesse au sol de l'aéronef (99) ; un vecteur vitesse air de l'aéronef (99) ; des températures et pression statiques de l'air environnant de l'aéronef (99) ; et des états actuels de masse et de motorisation de l'aéronef (99) ;
- le calcul d'une portion curviligne de la trajectoire (TDC) étant effectué sur la base d'une vitesse de variation de cap ou d'altitude inférieure à celle correspondant à l'autorité du système de pilotage automatique (9').

2. Procédé selon la revendication 1, **caractérisé en ce que** le procédé calcule par simulation une partie au moins de la trajectoire prévisionnelle de façon discrète, à partir d'un vecteur initial (VEI) de l'aéronef à voilure tournante (99).

3. Procédé selon la revendication 2, **caractérisé en ce que** le procédé utilise un module (SPA) de simulation du système de pilotage automatique (9'), un module (SHE) de simulation de l'aéronef à voilure tournante (99), et un module (SGU) de simulation de guidage.

4. Procédé selon la revendication 1, **caractérisé en ce que** le procédé surveille et/ou on mesure tout ou partie d'un vecteur d'état de l'aéronef à voilure tournante (99), comportant une composante de position 3D, une composante de vitesse 3D, une masse de l'aéronef (99), un état de motorisation et, tant qu'une variation substantielle du vecteur d'état est détectée, on réitère le calcul de trajectoire.

5. Procédé selon la revendication 1, **caractérisé en ce que** le procédé surveille et/ou le procédé mesure un vecteur d'état de l'atmosphère, comportant une vitesse du vent, une densité ou température de l'air et, tant qu'une variation substantielle de ce vecteur d'état de l'atmosphère est détectée, le procédé réitère le calcul de trajectoire.

6. Procédé selon la revendication 1, **caractérisé en ce que**:
i)- le procédé enregistre dans au moins une mémoire embarquée des caractéristiques ou possibilités prévisionnelles de l'aéronef (99), ainsi qu'un modèle de terrain et d'obstacles; puis, à l'aide d'un calculateur embarqué :
ii)- le procédé calcule trajectoire prévisionnelle qui soit proche de l'itinéraire et correspondant aux caractéristiques ou possibilités prévisionnelles de l'aéronef (99),
iii)- le procédé détermine un tube ou tunnel s'étendant le long de la trajectoire et dont la section correspond à des marges de sécurité,
iv)- le procédé recherche si un point du modèle de terrain et d'obstacles est inclus à l'intérieur du tube ou tunnel, et dans l'affirmative le procédé détermine au moins une portion de la trajectoire qui interfère avec le modèle de terrain et d'obstacles, puis
v)- le procédé présente le cas échéant à un opérateur embarqué la trajectoire et/ou la portion de trajectoire formant interférences, selon une fréquence de présentation.

7. Procédé selon la revendication 1, **caractérisé en ce que** le procédé détermine d'éventuelles interférences entre un volume de sécurité s'étendant le long de la trajectoire de consigne et un modèle de terrain et d'obstacles, et le procédé présente les interférences à un opérateur embarqué de façon répétée dans le temps et avec une fréquence de présentation suffisamment élevée pour que cet opérateur embarqué puisse modifier l'itinéraire afin de faire disparaître ces interférences.

8. Procédé selon la revendication 6 ou 7, **caractérisé en ce que** la fréquence de présentation est entre 5Hz et 100 Hz.

9. Procédé selon la revendication 7, **caractérisé en ce que**, pour présenter à un opérateur embarqué lesdites interférences, le procédé affiche sur un moyen de visualisation (6) une carte et / ou un profil du terrain à survoler, une projection horizontale et / ou verticale de l'itinéraire ainsi qu'une projection horizontale et/ou une coupe verticale de la trajectoire, et le procédé affecte d'un premier signe distinctif chacune des portions de la trajectoire (TDC) pour laquelle une interférence a été déterminée.

10. Procédé selon la revendication 1, **caractérisé en ce que** le procédé corrige, à intervalles de temps réguliers et selon une fréquence d'actualisation, la trajectoire en fonction : de paramètres actuels relatifs à l'aéronef à voilure tournante (99), du point de vol actuel de l'aéronef (99), et de paramètres actuels relatifs à l'environnement extérieur, de manière à obtenir une trajectoire (TDC) prévisionnelle de consigne actualisée, pour un opérateur embarqué et / ou pour le système de pilotage automatique (9').

11. Procédé selon la revendication 1, **caractérisé en ce que** le procédé vérifie qu'un écart entre la trajectoire prévisionnelle de consigne et la position actuelle de l'aéronef à voilure tournante (99) reste inférieur à une valeur prédéterminée, et le procédé déclenche une alarme sonore et / ou le procédé affiche un signe visuel si ce n'est pas le cas.

12. Procédé selon la revendication 10 ou 11, **caractérisé en ce que** la trajectoire prévisionnelle de consigne comporte une trajectoire de rejointe (TRV, TRH) calculée pour relier la position actuelle de l'aéronef à voilure tournante (99) à l'itinéraire.

13. Procédé selon l'une des revendications 10 à 11, **caractérisé en ce que** la trajectoire prévisionnelle de consigne comporte au moins une trajectoire de décollage (H1-ToC) et au moins une trajectoire d'atterrissage (FAF-H2).

14. Dispositif (1) embarqué ou embarquable à bord d'un aéronef à voilure tournante (99) à voilure tournante afin d'en faciliter la navigation, le guidage et le pilotage ; cet aéronef comportant système de pilotage automatique (9') ; le dispositif (1) comportant un système (2) programmé pour calculer une trajectoire d'aéronef (99) prévisionnelle (TDC), continue, à trois dimensions, proche d'un itinéraire ; **caractérisé en ce que** ce dispositif (1) met en oeuvre le procédé selon l'une des revendications 1 à 13 et comporte : un outil (7) de guidage manuel pour l'introduction de données d'itinéraire, un module pour surveiller l'introduction de données d'itinéraire par cet outil (7) de guidage manuel et pour commander une réitération du calcul de trajectoire lorsqu'une donnée d'itinéraire est manuellement modifiée, ainsi qu'un organe (6) de visualisation de la trajectoire calculée ; ce dispositif comportant un calculateur de guidage (8) dont des entrées sont reliées au calculateur (2) et à des capteurs (3) de l'aéronef (99), et dont des sorties sont reliées d'une part à des moyens (6) présentation et de visualisation (9) pour l'affichage de données de pilotage et est relié d'autre part au système de pilotage automatique (9') .

## Claims

1. Method for assisting the navigation, guidance and instrument piloting of a rotary-wing aircraft (99), provided with an autopilot system (9'), a navigation itinerary of this aircraft (99) being defined by itinerary data (ITI); this method calculating, on board the aircraft (99), a predicted trajectory (TDC) of the aircraft (99) that is continuous and three-dimensional;
the method calculating the predicted trajectory (TDC) for points of this trajectory (TDC), with a predicted date and/or speed; this trajectory (TDC) including curvilinear portions with no angular points, **characterised in that** the method complies with the flight envelope of the aircraft (99);
this method acquiring, using means on board the aircraft (99), characteristics of the envelope and outside environment of the aircraft (99), as a function of which characteristics the method calculates the trajectory (TDC); these characteristics including at least: a geographical position of the aircraft (99); angles of attitude and heading of the aircraft (99); a ground speed vector of the aircraft (99); an air speed vector of the aircraft (99); static temperatures and pressures of the air surrounding the aircraft (99); and current weight and engine states of the aircraft (99);
the calculation of a curvilinear portion of the trajectory (TDC) being carried out on the basis of a rate of variation in heading or in altitude that is less than that corresponding to the authority of the autopilot system (9').

2. Method according to Claim 1, **characterised in that** the method calculates by simulation at least part of the predicted trajectory in a discrete manner, from an initial vector (VEI) of the rotary-wing aircraft (99).

3. Method according to Claim 2, **characterised in that** the method uses a module (SPA) for simulating the autopilot system (9'), a module (SHE) for simulating the rotary-wing aircraft (99), and a guidance simulation module (SGU).

4. Method according to Claim 1, **characterised in that** the method monitors and/or there is measured all or part of a state vector of the rotary-wing aircraft (99), including a 3D position component, a 3D speed component, a weight of the aircraft (99), an engine state, and when a substantial change in the state vector is detected, the trajectory calculation is repeated.

5. Method according to Claim 1, **characterised in that** the method monitors and/or the method measures a state vector of the atmosphere, including a wind speed, an air density or temperature, and when a substantial change in this state vector of the atmosphere is detected, the method repeats the trajectory calculation.

6. Method according to Claim 1, **characterised in that**:
i) the method records in at least one on-board memory predicted capabilities or characteristics of the aircraft (99), together with a terrain and obstacle model; and then with the help of an on-board computer:
ii) the method calculates the predicted trajectory to be close to the itinerary and to correspond to the predicted capabilities or characteristics of the aircraft (99),
iii) the method determines a tube or tunnel extending along the trajectory and of a section that corresponds to safety margins,
iv) the method looks to see whether a point of the terrain and obstacle model is included inside the tube or tunnel, and if so the method determines at least one trajectory portion that interferes with the terrain and obstacle model, and then
v) where appropriate, the method presents to an on-board operator the trajectory and/or the trajectory portion creating interference, and does so at a presentation frequency.

7. Method according to Claim 1, **characterised in that** the method determines any interference between a safety volume extending along the setpoint trajectory and a terrain and obstacle model, and the method presents the interference to an on-board operator in a manner that is repeated in time and at a presentation frequency that is high enough to enable this on-board operator to modify the itinerary so as to cause this interference to disappear.

8. Method according to Claim 6 or 7, **characterised in that** the presentation frequency is between 5 Hz and 100 Hz.

9. Method according to Claim 7, **characterised in that**, in order to present said interference to an on-board operator, the method displays on a display means (6) a chart and/or a profile of the terrain to be overflown, a horizontal and/or vertical projection of the itinerary together with a horizontal projection and/or a vertical section of the trajectory, and the method gives a first distinctive sign to each of the portions of the trajectory (TDC) for which interference has been determined.

10. Method according to Claim 1, **characterised in that** the method corrects the trajectory, at regular time intervals and at an updating frequency, as a function: of current parameters relating to the rotary-wing aircraft (99), of the current flight point of the aircraft (99), and of current parameters relating to the outside environment, so as to obtain an updated setpoint predicted trajectory (TDC) for an on-board operator and/or for the autopilot system (9').

11. Method according to Claim 1, **characterised in that** the method checks whether a deviation between the setpoint predicted trajectory and the current position of the rotary-wing aircraft (99) remains below a predetermined value, and if not, the method triggers an audible alarm and/or the method displays a visual sign.

12. Method according to Claim 10 or 11, **characterised in that** the setpoint predicted trajectory includes a re-joining trajectory (TRV, TRH) calculated to connect the current position of the rotary-wing aircraft (99) to the itinerary.

13. Method according to one of Claims 10 to 11, **characterised in that** the setpoint predicted trajectory includes at least one takeoff trajectory (H1-ToC) and at least one landing trajectory (FAF-H2).

14. Device (1) on board or mountable on board a rotary-wing aircraft (99) so as to facilitate the navigation, guidance and piloting thereof; this aircraft including an autopilot system (9'); the device (1) including a system (2) programmed to calculate a predicted trajectory (TDC) of the aircraft (99) that is continuous, three-dimensional and close to an itinerary; **characterised in that** this device (1) carries out the method according to one of Claims 1 to 13 and includes: a manual guidance tool (7) for inputting itinerary data, a module for monitoring the inputting of itinerary data by this manual guidance tool (7) and for ordering a repetition of the trajectory calculation when itinerary data is manually modified, and a member (6) for displaying the calculated trajectory; this device including a guidance computer (8) having inputs connected to the computer (2) and to sensors (3) of the aircraft (99), and having outputs connected on the one hand to means (6) for presentation and display (9) for displaying piloting data and on the other hand to the autopilot system (9').

## Patentansprüche

1. Verfahren zur Unterstützung der Navigation, der Führung und Instrumentensteuerung eines Drehflügelluftfahrzeugs (99) mit einem Selbststeuerungssystem (9'), wobei eine Flugroute dieses Luftfahrzeugs (99) durch Daten dieser Flugroute (ITI) definiert ist, und das Verfahren an Bord des Luftfahrzeugs (99) eine kontinuierliche voraussichtliche Flugbahn des Luftfahrzeugs (99) in drei Dimensionen berechnet, wobei das Verfahren die voraussichtliche Flugbahn (TDC) für Punkte dieser Flugbahn (TDC) mit einem Datenwert und/oder einer voraussichtlichen Geschwindigkeit berechnet, wobei diese Flugbahn (TDC) krummlinige Abschnitte aufweist und keine winkligen Stellen,
**dadurch gekennzeichnet, dass** das Verfahren die Flughüllkurve des Luftfahrzeugs (99) beachtet, wobei des Verfahren mit Hilfe von im Luftfahrzeug (99) eingebauten Mitteln Eigenschaften der Hüllkurve und des äußeren Umfelds des Luftfahrzeugs (99) erfasst, und das Verfahren in Abhängigkeit von diesen Eigenschaften die Flugbahn (TDC) berechnet, wobei diese Eigenschaften mindestens umfassen: eine geographische Position des Luftfahrzeugs (99), Höhenwinkel und den Kurs des Luftfahrzeugs (99), einen Geschwindigkeitsvektor des Luftfahrzeugs (99) gegenüber dem Boden, einen Geschwindigkeitsvektor des Luftfahrzeugs (99) gegenüber der Luft, statische Temperaturen und Drücke der Luft, die das Luftfahrzeug (99) umgibt, und aktuelle Zustandswerte bezüglich des Gewichtes und der Motorisierung des Luftfahrzeugs (99), wobei die Berechnung eines kummlinigen Teils der Flugbahn (TDC) auf der Grundlage einer Veränderungsgeschwindigkeit des Kurses oder der Höhe durchgeführt wird, wobei diese Geschwindigkeitsveränderungswerte kleiner sind als die entsprechenden von dem automatischen Selbststeuersystem (9') vorgegebenen.

2. Verfahren nach Anspruch 1, **dadurch gekennzeichnet, dass** das Verfahren durch Simulation mindestens einen Teil der voraussichtlichen Flugbahn mit diskreten Werten ausgehend von einem Anfangsvektor (VEI) des Drehflügelluftfahrzeugs (99) berechnet.

3. Verfahren nach Anspruch 2, **dadurch gekennzeichnet, dass** das Verfahren ein Simulationsmodul (SPA) des automatischen Selbststeuerungssystems (9'), ein Simulationsmodul (SHE) des Drehflügelluftfahrzeugs (99) und ein Führungssimulationsmodul (SGU) verwendet.

4. Verfahren nach Anspruch 1, **dadurch gekennzeichnet, dass** der gesamte Zustandsvektor des Drehflügelluftfahrzeugs (99) oder ein Teil davon von dem Verfahren überwacht wird und/oder man diesen misst, wobei der Zustandsvektor eine Positionskomponente in drei Dimensionen, eine Geschwindigkeitskomponente in drei Dimensionen, ein Gewicht des Luftfahrzeugs (99), einen Zustand der Motorisierung aufweist, und wenn eine wesentliche Änderung des Zustandsvektors erfasst wird, die Berechnung der Flugbahn wiederholt wird.

5. Verfahren nach Anspruch 1, **dadurch gekennzeichnet, dass** das Verfahren einen Zustandsverktor der Atmosphäre überwacht und/oder misst, der eine Windgeschwindigkeit, eine Dichte oder Temperatur der Luft beinhaltet, und wenn eine wesentliche Änderung des Zustandsvektors der Atmosphäre erfasst wird, das Verfahren die Berechnung des Flugwegs wiederholt.

6. Verfahren nach Anspruch 1, **dadurch gekennzeichnet, dass**
i)- das Verfahren in mindestens einem Bordspeicher Eigenschaften oder voraussichtliche Möglichkeiten des Luftfahrzeugs (99) sowie ein Modell des Geländes und von Hindernissen abspeichert, und dann mit Hilfe eines Bordrechners:
ii)- das Verfahren die voraussichtliche Flugbahn berechnet, die der Flugbahn möglichst nahekommt und den Eigenschaften oder voraussichtlichen Möglichkeiten des Luftfahrzeugs (99) entsprechen soll,
iii)- das Verfahren ein Rohr oder einen Tunnel bestimmt, der sich entlang der Flugbahn erstreckt und dessen Querschnitt Sicherheitsmargen entspricht,
iv)- das Verfahren untersucht, ob ein Punkt des Modells des Geländes und von Hindernissen sich im Inneren des Rohres oder Tunnels befindet und, bejahendenfalls, das Verfahren mindestens einen Teil der Flugbahn bestimmt, die sich mit dem Modell des Geländes und von Hindernissen überlagert, und dann
v)- das Verfahren gegebenenfalls einem Bordnavigator die Flugbahn und/oder den überlappenden Teil der Flugbahn mit einer Darstellungsfrequenz präsentiert.

7. Verfahren nach Anspruch 1, **dadurch gekennzeichnet, dass** das Verfahren eventuelle Überlagerungen zwischen einem Sicherheitsvolumen, das sich entlang der Soll-Flugbahn erstreckt, und einem Modell des Geländes und von Hindernissen bestimmt und diese Überlagerungen einem Bordnavigator wiederholt präsentiert mit einer ausreichend hohen Präsentationsfrequenz, damit der Bordnavigator die Flugbahn ändern kann, um die Überlagerungen verschwinden zu lassen.

8. Verfahren nach Anspruch 6 oder 7, **dadurch gekennzeichnet, dass** die Präsentationsfrequenz zwischen 5 und 100 Hz liegt.

9. Verfahren nach Anspruch 7, **dadurch gekennzeichnet, dass** um einem Bordnavigator die Überlagerungen zu zeigen, das Verfahren auf einem Anzeigemittel (6) eine Karte und/oder ein Profil des zu überfliegenden Geländes, eine horizontale und/oder vertikale Projektion der Flugbahn sowie eine horizontale Projektion und/oder einen senkrechten Schnitt der Flugbahn darstellt, und wobei das Verfahren jedem der Bereiche der Flugbahn (TDC), für den eine Überlagerung festgestellt wurde, ein erstes Unterscheidungszeichen zuordnet.

10. Verfahren nach Anspruch 1, **dadurch gekennzeichnet, dass** das Verfahren in gleichmäßigen zeitlichen Abständen gemäß einer Aktualisierungsfrequenz die Flugbahn korrigiert in Abhängigkeit von:
aktuellen Parametern bezüglich des Drehflügelluftfahrzeugs (99), der aktuellen Flugposition des Luftfahrzeugs (99) und von aktuellen Parametern bezüglich der äußeren Umgebung, derart, dass für einen Bordnavigator und/oder für das automatische Selbststeuerungssystem (9') eine aktualisierte voraussichtliche Soll-Flugbahn (TDC) erhalten wird.

11. Verfahren nach Anspruch 1, **dadurch gekennzeichnet, dass** das Verfahren überprüft, ob ein Unterschied zwischen der voraussichtlichen Soll-Flugbahn und der aktuellen Position des Drehflügelluftfahrzeugs (99) unterhalb einem vorbestimmten Wert bleibt, und das Verfahren einen akustischen Alarm auslöst und/oder das Verfahren ein optisches Signal anzeigt, wenn dies nicht der Fall ist.

12. Verfahren nach Anspruch 10 oder 11, **dadurch gekennzeichnet, dass** die voraussichtliche Soll-Flugbahn eine Rückführungsflugbahn (TRV, TRH) aufweist, die berechnet ist, um die aktuelle Flugposition des Drehflügelflugzeugs (99) auf die Flugroute zurückzuführen.

13. Verfahren nach einem der Ansprüche 10 oder 11, **dadurch gekennzeichnet, dass** die voraussichtliche Soll-Flugbahn mindestens eine Startflugbahn (H1-ToC) und mindestens eine Landeflugbahn (FAF-H2) aufweist.

14. Vorrichtung (1), welche an Bord eines Drehflügelluftfahrzeugs (99) eingebaut ist oder einbaubar ist, um dessen Navigation, die Führung sowie die Steuerung zu erleichtern, wobei dieses Luftfahrzeug ein automatisches Selbststeuerungssystem (9') aufweist, und die Vorrichtung (1) ein System (2) aufweist, welches programmiert ist, um eine kontinuierliche voraussichtliche Flugbahn des Luftfahrzeugs (99) in drei Dimensionen zu berechnen, die einer Flugroute nahekommt , **dadurch gekennzeichnet, dass** die Vorrichtung (1) das Verfahren nach einem der Ansprüche 1 bis 13 ausführt und aufweist: ein manuelles Führungsgerät (7) zum Eingeben von Flugroutendaten, ein Modell zum Überwachen der Eingabe der Flugroutendaten durch dieses Gerät (7) zur manuellen Führung und zur Steuerung einer Wiederholung der Berechnung der Flugbahn, wenn ein Datenwert der Flugroute manuell verändert worden ist, sowie ein Anzeigeorgan (6) für die berechnete Flugbahn, wobei die Vorrichtung einen Führungsrechner (8) aufweist, dessen Eingänge mit dem Rechner (2) und mit Detektoren (3) des Luftfahrzeugs (99) verbunden sind und dessen Ausgänge einerseits mit Mitteln (6) zur Darstellung und für die Anzeige (9) von Steuerungsdaten und andererseits mit dem automatischen Selbststeuerungssystem (9') verbunden sind.
